# EUROPEAN PATENT APPLICATION

(11) **EP 0 802 362 A1**
(43) Date of publication of application: **22.10.1997**
(21) Application number: 97830177.8
(22) Date of filing: 15.04.1997
(51) Int. Cl.: F16K 31/34, F16K 31/365, G05D 9/04

(54) **Liquid level regulator with servocontrolled valve for reservoirs**

(30) Priority: 18.04.1996 IT FI960083
(71) Applicant: Mac 3 S.p.A., 50013 Campi Bisenzio, Firenze (IT)
(72) Inventor: Ronchi, Mirian, 50137 Firenze (IT)
(74) Representative: Bardini, Marco Luigi

(57) **Abstract**

A regulator of the level of a liquid in a reservoir comprising a valve body (1) with a valve member (8) and float means to control the operation. The valve member is a membrane (8) with a first passage (9) between the valve inlet and an intermediate chamber (7) and a second passage (10,12) between the intermediate chamber (7) and the valve outlet. The second passage is interceptable and the relevant intercepting means (13,14) are actuated by the float. When the level is at a set value, the second passage (10, 12) is closed and the pressure in the intermediate chamber (7) is equal to the pressure upstream of the membrane (8). When the level decreases, the second passage (10, 12) opens depressurizing the intermediate chamber (7). In this condition, the membrane (8) raises to put into communication the valve inlet with the valve outlet.

## Description

The present invention concerns the field of regulators of the liquid level inside a reservoir or other collection device, and more precisely relates to a liquid level regulator with a valve provided with servocontrol.

The known types of level regulators, designed to maintain a predetermined liquid level in a reservoir or in another collection device, comprise a cutoff unit for the liquid supply driven by a sensor of the liquid level in the reservoir, so that, when said level decreases below a predetermined value, the sensor activates the cutoff unit so that it opens and thereby allows the required level of liquid to be restored, after which the sensor closes the cutoff unit thus interrupting the supply of liquid.

In a very common embodiment of this type of liquid level regulator the sensor is a float and the cutoff unit is a valve with needle or membrane or similar valve member. The float is connected to the valve member by means of an actuating arm than controls its opening and closing depending on the liquid level in the reservoir.

The float type level regulators are very simply built and therefore quite inexpensive. However, since the force to be applied on the valve member to keep it closed is directly proportional to the hydrostatic pressure of the liquid on the float, it is clear that the greater is the force exerted on the valve member to force it open, the larger is the float size required. This necessity bars the possibility of adopting this type of level regulator in liquid supply pipes of diameter larger than a certain value, such as may be required in large reservoirs. Moreover, since the movement of the valve member is directly controlled by the float, as the level rises, the outlet opening becomes smaller and smaller, so that the level's restoring time is relatively long and the process quite noisy.

The object of the present invention is to provide a liquid level regulator in a reservoir, of the float type, that is not limitated in use even in large plants.

This object is reached by the level regulator according to the present invention, which is characterized by the fact that on the membrane valve member there are formed a first opening, between the inlet section of the valve and an intermediate chamber, and a second opening, between said intermediate chamber and the outlet section of the valve. A cutoff device for the second opening is connected to a float device and is suited to close the second opening when the liquid level in the reservoir reaches a predetermined value, so that the liquid pressure in said intermediate chamber is equal to that present upstream of said membrane, and to open the second opening when the liquid level in the reservoir is different from the predetermined value, so that the liquid pressure in said intermediate chamber is substantially the same as that downstream of said membrane.

Other characteristics and advantages of the level regulator according to the present invention will be clearer from the following description of one of its embodiments, which is to be intended only as an example and not a limitation, referring to the attached drawings, in which:
- Figure 1 is a transverse cross sectional view of the level regulator according to the present invention;
- Figures 2 and 3 are top and bottom plan views, respectively, of the body of the level regulator's valve according to the present invention;
- Figures 4 and 5 are a top plan and side cross sectional views, respectively, of the membrane valve member mounted in the valve of the level regulator according to the invention.

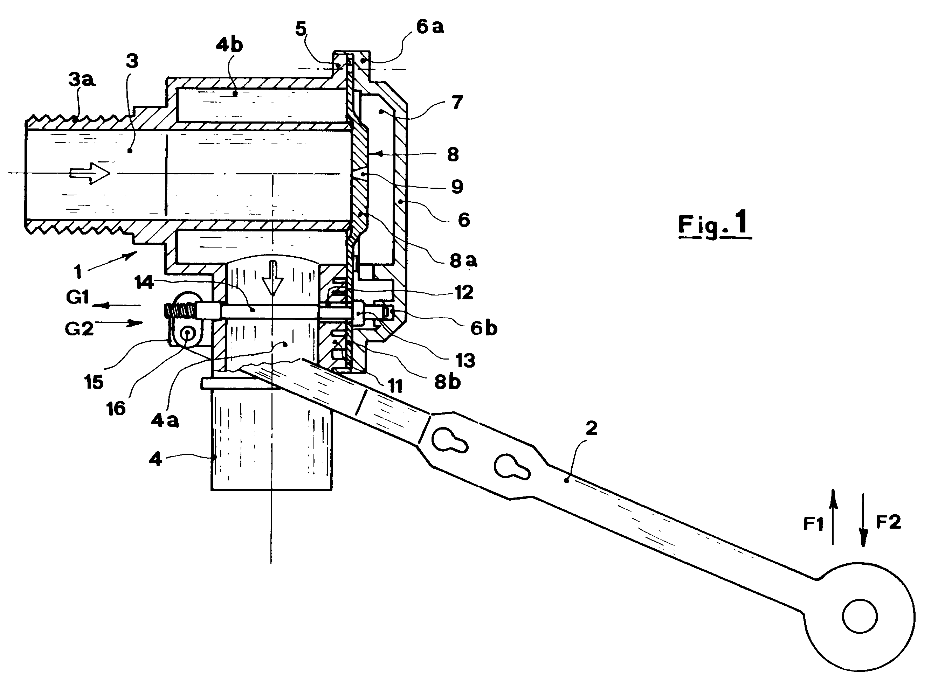

With reference to figures 1 to 3, 1 indicates generically a valve body of the level regulator according to the invention and 2 an actuating arm carrying a float (not shown) attached to its free end. Valve body 1 includes an inlet section 3 made of an externally threaded inlet tubular portion 3a to be connected to the liquid supply pipe of the reservoir, and of an outlet section 4 made of an outlet tubular portion extending orthogonally to the inlet section 3 from an outlet annular chamber 4b coaxial to inlet tubular portion 3a. A flange 5 projects laterally from the open end of annular chamber 4b, and a cover 6 delimiting an intermediate chamber 7 is attached to it. Between flange 5 and a corresponding flange 6a of cover 6 a valve member in the form of an elastic membrane 8 is locked resting on the free edge of inlet tubular portion 3a, thus preventing the liquid from flowing from the latter to annuiar chamber 4b and from it to outlet tubular portion 4a.

The communication between inlet section 3 and intermediate chamber 7 is obtained by means of a small hole 9, formed in the center of membrane 8, so that, when the latter is in the closed position, chamber 7 is full of liquid at the same pressure as the liquid inside inlet section 3.

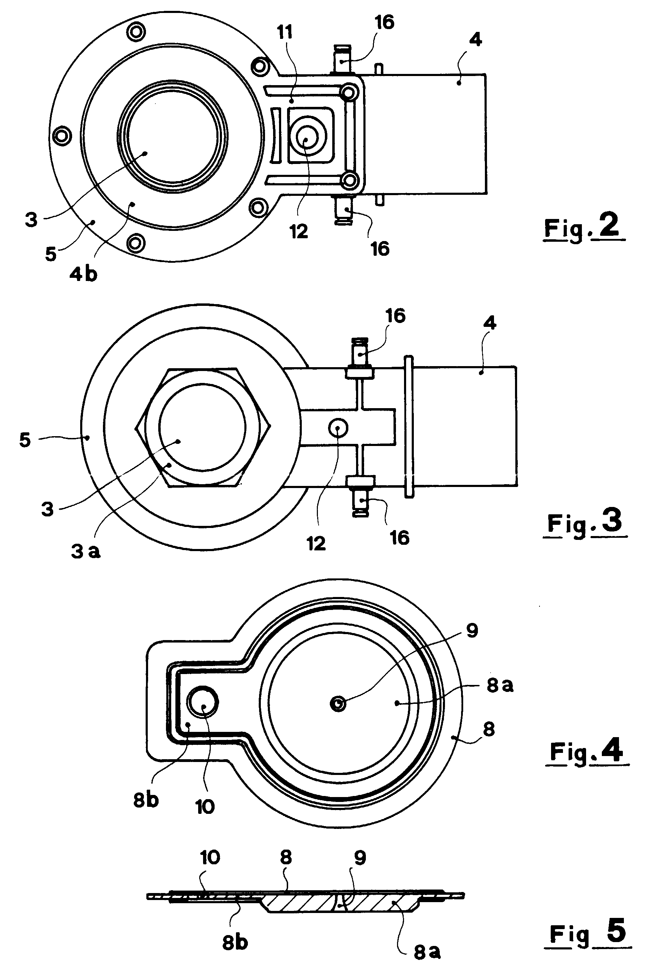

As shown in figures 4 and 5, the membrane 8 is circular in shape, its central part 8a is thicker and of larger diameter than that of the outlet opening of inlet tubular portion 3a. Membrane 8, therefore, has a flat face resting on said outlet opening and the other face with a thicker central area 8a projecting into chamber 7. Hole 9 is formed in the center of said thicker area 8a. From the circular part of membrane 8 projects out, in the same plane, an appendage 8b with a hole 10 through it. Appendage 8b rests on a flattened area 11 that is formed on the outside of outlet tubular portion 4a in the same plane as flange 5 and has a through hole 12 communicating with outlet tubular portion 4a. When membrane 8 is placed in its operating position, hole 10 and hole 12 are coaxial and form together a communication between chamber 7 and the inside of outlet tubular portion 4a.

The passage defined by holes 10 and 12 is intercepted by a mobile plate 13 integral to a stem 14 sliding axially inside holes 10 and 12 whose end engages into a seat 6b formed into cover 6 inside chamber 7, while its other end projects sealingly from outlet tubular portion 4a through the side opposite to flattened area 11. Plate 13 can be moved axially inside chamber 7 and intercepts hole 10 of membrane 8.

The end of stem 14 projecting from outlet tubular portion 4a is connected by an articulated joint to arm 2, which is attached to two fins 15 extending from outlet tubular portion 4a by means of a pivot 16. The connection between arm 2 and stem 14 is such that (see figure 1), when the float moves in the direction of arrow F1-that is, when the level in the reservoir rises - stem 14 slides in the direction of arrow G1 - that is, plate 13 is brought into closed position for passage 10-12, as shown in figure 1; vice versa, when the float moves in the direction of arrow F2 - that is, the level in the reservoir goes down - stem 14 slides in the direction of arrow G2, bringing plate 13 away from passage 10-12.

Moreover, the connection is such as to introduce a delay between the movement of arm 2 and the movement of stem 14, so that small variations in the level go unnoticed, thereby preventing a continual opening and closing of passage 10-12 and possible damage to the motor of the supplying pump.

From the description above it is clear that the opening and closing of membrane 8 is not directly controlled by arm 2, but by means of stem 14 and plate 13 so as not to be dependent, when designing the size of the float, on the diameter of inlet tubular portion 3a. As a matter of fact, when the float is at its highest level, the liquid pressure in chamber 7, on the one hand presses membrane 8 against the opening of annular chamber 4b, on the other hand presses plate 13 against the edge of hole 10, thus preventing the liquid from flowing into outlet tubular portion 4a either through annular chamber 4b or through passage 10-12. Membrane 8 is therefore pressed against outlet opening of inlet tubular portion 3a as a consequence of the difference in pressure between intermediate chamber 7 and annular chamber 4b. When, instead, as a consequence of a lowering of the level in the reservoir, plate 13 is displaced from hole 10, the liquid pressure inside chamber 7 is suddenly reduced, unbalancing the forces acting on membrane 8, whose thicker central part 8a releases from the outlet opening of inlet tubular portion 3a, allowing the liquid to flow through annular chamber 4b. The cross sectional diameter of passage 10-12 being rather larger than that of hole 9, the instantaneous depressurization of chamber 7 is ensured. Moreover, membrane 8 being more rigid in its center section because of the thickening 8a, as it raises or lowers its surface remains essentially parallel to itself, therefore ensuring, in the opening phase, the full designed outlet cross section and, in the closing phase, a simultaneous closure along the whole perimeter.

Hole 9 is conveniently flared toward chamber 7 so as to avoid its obstruction by solid particles that may be present in the liquid.

With this arrangement, the outlet flow cross section defined between inlet tubular portion 3 and membrane 8 stays about the same during the opening phase and it closes as soon as plate 13 blocks passage 10-12, contrary to what happens in valves for traditional level regulators. This allows a fast restoring of the level and a reduction of the noise due to the outlet flow.

Variations and/or modifications can be brought to the level regulator according to the present invention, without departing from the scope of the invention itself.

## Claims

1. A regulator of the level of a liquid in a reservoir comprising a valve body (1) with an inlet (3) for the liquid and an outlet (4) toward said reservoir and a valve member (8) between said inlet and said outlet, as well as float means for controlling, depending on the level of the liquid in the reservoir, the movement of said valve member (8) in order to allow or prevent the liquid flow from said inlet (3) to said outlet (4), characterized by the fact that said valve member (8) is of the membrane type and a first opening (9) is formed on it to bring said inlet into communication with an intermediate chamber (7) inside said valve body, and a second opening (10) to bring into communication said intermediate chamber (7) with said outlet (4), cutoff means (13) for said second opening (10), controlled by said float means being provided for blocking said second opening when the liquid level in the reservoir reaches a predetermined value, so that the liquid pressure in said intermediate chamber (7) is equal to the pressure upstream said membrane (8), and opening said second opening (10) when the liquid level in the reservoir is different from the predetermined one, so that the liquid pressure in said intermediate chamber is substantially equal to the pressure downstream the membrane (8).

2. The level regulator according to claim 1, wherein said inlet (3) and said outlet (4) of said valve body (1) comprises an inlet tubular portion (3a) and an outlet tubular portion (4a) perpendicular to each other, said outlet tubular portion communicating with a discharge chamber (4b) located around said inlet tubular portion, the outflow opening of the latter being coplanar to the inflow opening of said discharge chamber and to a flange (5) to which said membrane is fixed, said intermediate chamber (7) being delimited by said membrane (8) and by a cover (6) for said valve body attached to said flange (5).

3. The level regulator according to claim 2, wherein said discharge chamber (4b) is of annular shape and coaxial with said inlet tubular portion.

4. The level regulator according to previous claims, wherein said cutoff means of said second opening (10) comprise a stem (14) sliding transversally inside said outlet tubular portion (4a) and connected by an articulated joint to an arm (2) carrying a float, said stem being provided with a plate (13) sliding inside said intermediate chamber and suited to intercept said second opening.

5. The level regulator according to previous claims, wherein the cross sectional diameter of said second opening (10) is larger than that of the first opening (9).

6. The level regulator according to previous claims, wherein said first opening (9) has a flared cross section toward said intermediate chamber (7).

7. The level regulator according to previous claims, wherein said membrane valve member (8) has a thicker central area (8a) whose diameter is larger than the outflow opening of said inlet tubular portion (3a).
